# EUROPÄISCHE PATENTSCHRIFT

(11) **EP 0 559 713 B1**
(45) Veröffentlichungstag und Bekanntmachung des Hinweises auf die Patenterteilung: **06.08.1997**
(21) Anmeldenummer: 91920833.0
(22) Anmeldetag: 29.11.1991
(51) Int. Cl.: F16K 31/06, F16K 31/40

(54) **EINSCHRAUBVENTIL**
SCREW-IN VALVE
SOUPAPE A VISSER

(30) Priorität: 30.11.1990 AT 2433/90; 04.02.1991 AT 236/91; 03.07.1991 AT 1330/91
(43) Veröffentlichungstag der Anmeldung: 15.09.1993
(73) Patentinhaber: Weber, Günter, A-2474 Gattendorf (AT)
(72) Erfinder: Weber, Günter, A-2474 Gattendorf (AT)
(74) Vertreter: Holzer, Walter, Dipl.-Ing.
(86) Internationale Anmeldenummer: AT9100122
(87) Internationale Veröffentlichungsnummer: WO9209836

(56) Entgegenhaltungen:
- EP-A- 0 136 473
- DE-A- 3 428 096
- FR-A- 2 518 695
- US-A- 4 725 039

## Beschreibung

Die Erfindung betrifft ein Einschraubventil mit einem Einschraubteil, der in eine Ventilaufnahme eingeschraubt werden kann und einen Ventilsitzkörper enthält, und mit einem an den Einschraubteil angrenzenden Flanschteil, der mit einer zentralen Bohrung zum Durchtritt einer Ventilspindel versehen und eine Betätigungseinrichtung für die Ventilspindel trägt.

Bekannte derartige Einschraubventile (Cartridge-Ventile) werden jeweils für ein spezielles Einsatzgebiet und eine bestimmte Funktion ausgelegt. Es gibt somit eine Vielzahl als Cartridge-Ventile ausgeführter Ventiltypen für Fluide, wie hydraulische oder pneumatische Schalt- und Steuerventile. Für jeden Ventiltyp muß ein eigener Ventilgrundkörper aus Einschraubteil und Flanschteil gefertigt werden, in den speziell für diesen Grundkörper ausgelegte Ventilspindeln, Ventilsitzkörper bzw. Ventilspindel-Betätigungseinrichtungen eingesetzt werden. Diese Ventile erfordern auf der Herstellerseite einen hohen Umrüstaufwand bei der Umstellung der Fertigung von einem Ventiltyp auf einen anderen, auf der Lieferantenseite einen hohen Lagerhaltungsaufwand und auf der Kundenseite einen hohen Logistikaufwand bei der Zusammenstellung von geeigneten Ventilschaltungen. Die unterschiedlichen Einbaumaße der für die verschiedenen Ventiltypen notwendigen Ventilgrundkörper erschweren anderseits den Entwurf und Aufbau von Ventilschaltungen mit Einschraubventilen. Schließlich erfolgt der Zusammenbau der bekannten Ventile teilweise durch Hartverlöten oder Verschweißen der einzelnen Ventilteile; insbesondere werden herkömmliche Ventilspindel-Betätigungseinrichtungen an den Flanschteil des Ventiles angelötet, so daß ein Austausch defekter Funktionselemente ohne Zerstörung des Ventiles nicht mehr möglich ist.

Die US-PS 4 725 039 zeigt einen Flansch-Einschraubteil mit einschraubbarem Ventilsitzkörper und einstückig angesetzter Betätigungseinrichtung, die nicht variabel ist.

Die EP-A-0 136 473 offenbart einen Flansch-Einschraubteil mit einschraubbarem Ventilsitzkörper und angeschweißter bzw. angelöteter Betätigungseinrichtung.

Die DE-OS 34 28 096 zeigt einen Flansch-Einschraubteil mit einschraubbarem Ventilsitzkörper, wobei über die Befestigung der Betätigungseinrichtung nichts gesagt wird.

Die FR-A-2 158 695 offenbart einen Flansch-Einschraubteil mit eingeschraubter Betätigungseinrichtung ein einstückig angesetztem Ventilsitzkörper, der ebenfalls nicht variabel ist.

Die Erfindung setzt sich zum Ziel, ein Einschraubventil der eingangs genannten Art zu schaffen, das bei stets gleichen, standardisierten Außenabmessungen ohne aufwendige Umrüstarbeiten unterschiedliche Funktionen gängiger Einschraubventile annehmen kann und eine einfache Montage sowie ein einfaches Auswechseln der die Ventilfunktion bestimmenden Elemente gewährleistet.

Dieses Ziel wird erfindungsgemäß erreicht mit einem Einschraubventil mit einem im wesentlichen rohrförmigen Einschraubteil, der ein Außengewinde zum Einschrauben in eine Ventilaufnahme aufweist, und mit einem an den Einschraubteil angrenzenden, mit diesem einstückigen Flanschteil, der mit einer zentralen Bohrung zum Durchtritt einer Ventilspindel versehen ist, wobei die Bohrung des Flanschteiles ein Innengewinde zur Aufnahme eines endseitig mit einem Außengewinde versehenen, im wesentlichen rohrförmigen Gehäuses einer auf die Ventilspindel axial einwirkenden Betätigungseinrichtung und der Einschraubteil ein Innengewinde zum Einschrauben eines endseitig mit einem Außengewinde versehenen, auswechselbaren, im wesentlichen rohrförmigen Ventilsitzkörpers aufweist.

Dadurch wird ein Einschraubventil-Grundkörper geschaffen, der verschiedenste Ventilbetätigungseinrichtungen und Ventilspindel/Ventilsitzkörper-Anordnungen aufnehmen kann, wobei die Außenform und die Außenabmessungen des Einschraubteiles und des Flanschteiles für jede Funktionstype des Einschraubventiles gleich und die Ventilfunktionselemente in einfacher Weise austauschbar sind. Durch die modulartige Aufgliederung des Einschraubventiles in drei mit einem Gewinde versehene Elemente, nämlich Betätigungseinrichtung, Flasch- und Einschraubteil, Ventilsitzkörper, sowie die austauschbare Ventilspindel lassen sich alle benötigten Ventiltypen baukastenartig zusammensetzen, wobei sich der zusätzliche Vorteil ergibt, daß die verschraubbaren Ventilelemente aus beliebigen Materialien hergestellt werden können, z.B. aus relativ billigem Aluminium statt aus nicht magnetischem Stahl, was insbesondere für das rohrförmige Gehäuse eine erhebliche Kosteneinsparung bedeutet.

Die Erfindung setzt sich ferner zur Aufgabe, das oben beschriebene Einschraubventil durch Weiterbildung der die Ventilfunktion bestimmenden auswechselbaren Ventil-Modulelemente so zu gestalten, daß in diesem Ventil bereits die Grundfunktionen für den Antrieb eines Hubzylinders integriert sind. Diese Aufgabe wird mit den Merkmalen der unabhängigen Ansprüche 1 und 2 gelöst, wodurch ein Wechselventil, das gleichzeitig als Ablaßventil wirkt, in das Schaltventil integriert wird.

Vorteilhafte Ausführungsformen sind in den Unteransprüchen angeführt.

Die Erfindung wird nun an Hand von in den beigeschlossenen Zeichnungen dargestellten Ausführungsbeispielen näher erläutert. In den Zeichnungen zeigen:
Fig. 1 einen Längsschnitt durch ein Ventil mit der Funktion eines druckkompensierten doppeltsperrenden 2/2-Wege-Ventiles mit Magnetbetätigung;
Fig. 5 einen Längsschnitt durch eine erste Ausführungsform der Erfindung mit der Funktion eines druckkompensierten leckölfreien 3/2-Wege-Ventiles mit Magnetbetätigung;
Fig. 9 einen Längsschnitt durch eine zweite Ausführungsform der Erfindung mit den Grundsteuerfunktionen für den Antrieb eines Hubzylinders; und
Fig. 10 ein Hydraulikschaltbild einer Laderampensteuerung, bei welchem das Einschraubventil nach Fig. 9 Anwendung finden kann.

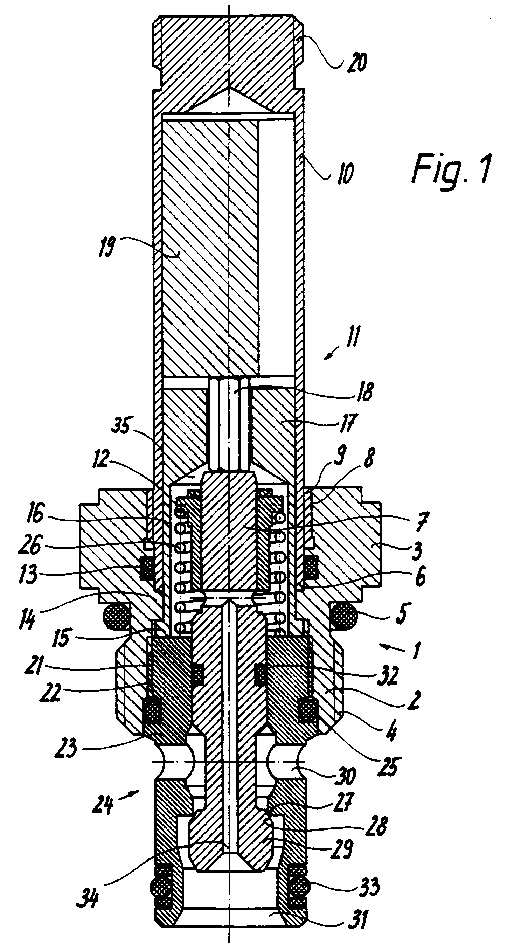

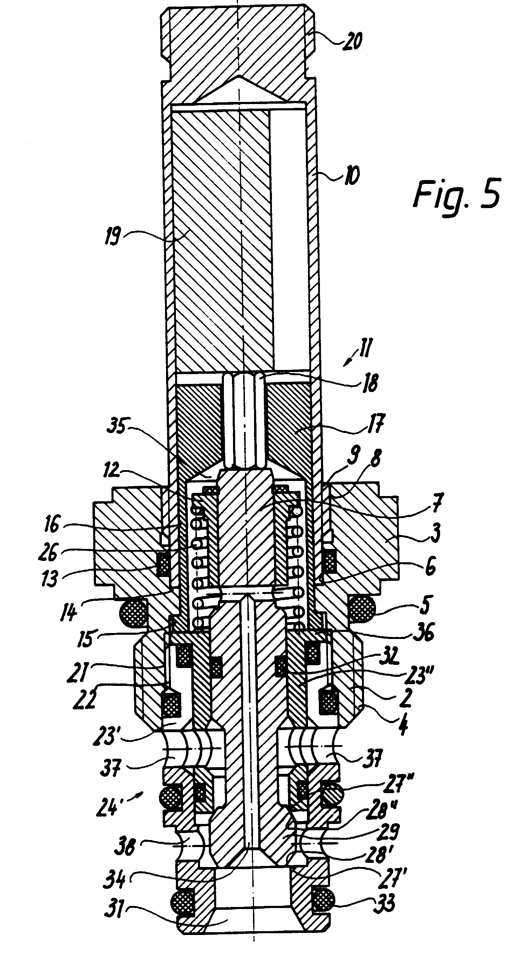

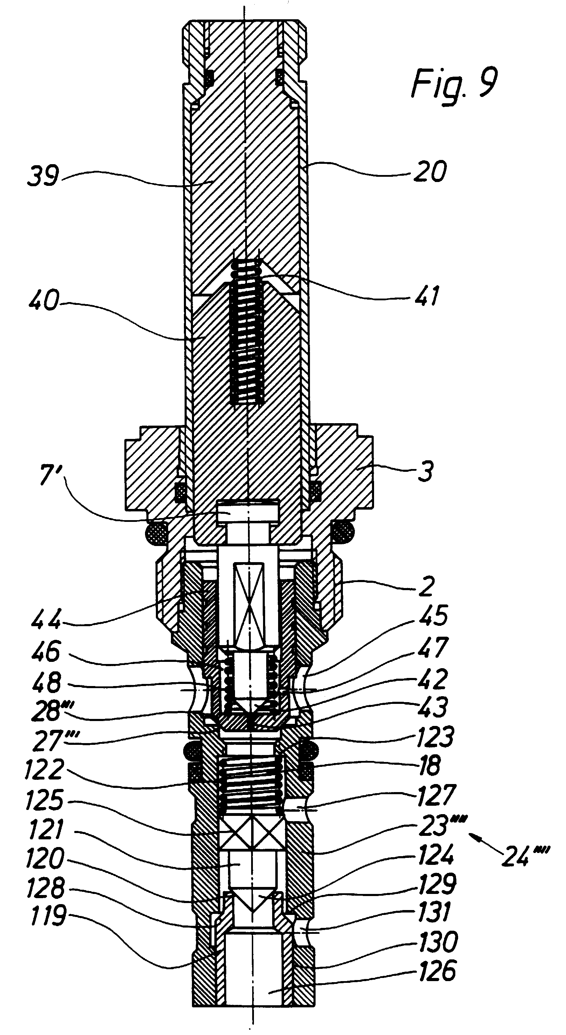

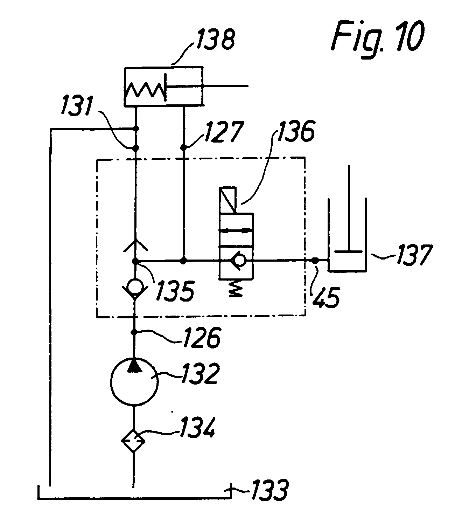

Das in Fig 1 dargestellte Einschraubventil besitzt einen einstückigen Ventilgrundkörper 1, der durch einen im wesentlichen rohrförmigen Einschraubteil 2 und einen an diesen angrenzenden Flanschteil 3 gebildet wird. Der Einschraubteil 2 weist ein Außengewinde 4 zum Einschrauben in eine (nicht dargestellte) Ventilaufnahme auf und der Flanschteil 3 ist außenseitig in Form einer Sechskantmutter ausgebildet, um den Angriff eines Werkzeuges zu ermöglichen. Im Übergangsbereich zwischen Einschraubteil 2 und Flanschteil 3 ist ein Dichtungsring 5 auf den Einschraubteil aufgeschoben.

Der Flanschteil 3 ist mit einer zentralen Bohrung 6 für den Durchtritt einer Ventilspindel 7 bzw. zum Zutritt zu dieser Ventilspindel 7 versehen. Die Flanschteilbohrung 6 hat ein Innengewinde 8 zur Aufnahme eines endseitig mit einem Außengewinde 9 versehenen, aus nicht magnetischem Material bestehenden, im wesentlichen rohrförmigen Gehäuses 10 einer auf die Ventilspindel 7 axial einwirkenden, später noch beschriebenen Betätigungseinrichtung 11. Im Anschluß an das Innengewinde 8 ist in der Flanschteilbohrung 6 eine Ringnut eingearbeitet, in der ein Dichtungsring 13 liegt.

Weiters ist im Anschluß an das Innengewinde 8 und den Dichtungsring 13 an der Innenseite der Flanschteilbohrung 6 ein einwärts vorspringender Bund 14 ausgebildet, der von einem Endflansch 15 einer in das Gehäuse 10 der Betätigungseinrichtung 11 eingeschobenen Hülse 16 hintergriffen wird. Diese Hülse 16 ist an ihrem dem Endflansch 15 abgewandten Ende zu einer Gleitführung 17 für einen prismatischen Bolzen 18 verengt, der mit seinem einen Ende an der oberen Stirnseite der Spindel 7 und mit seinem anderen Ende an einem Kern 19 zur Anlage kommt, welcher in dem Gehäuse 10 verschiebbar geführt ist.

Die Gleitführung 17, der Bolzen 18 und der Kern 19 bilden die Betätigungseinrichtung 11, wobei die Hülse 16 mit der Gleitführung 17 und der Kern 19 aus magnetisierbarem Material, z.B. Weicheisen, gefertigt sind, wogegen der Bolzen 18 aus nicht magnetischem Material gefertigt ist. Auf das rohrförmige Gehäuse 10 ist eine (nicht dargestellte) Magnetspule aufgeschoben, die durch eine (ebenfalls nicht dargestellte) Gewindemutter fixiert wird, die auf das mit einem Außengewinde 20 versehene obere Ende des Gehäuses 10 geschraubt wird. Bei elektrischer Speisung der Magnetspule werden die Gleitführung 17 und der Kern 19 magnetisiert und ziehen sich gegenseitig an, wodurch der Bolzen 18 und damit die Ventilspindel 7 nach unten gedrückt werden.

Der Einschraubteil 2 weist ein Innengewinde 21 zum Einschrauben eines auswechselbaren Ventilsitzkörpers 24 auf, welcher durch einen am oberen Ende mit einem Außengewinde 22 versehenen Rohrteil 23 gebildet wird. Im Anschluß an das Außengewinde 22 ist auf dem Rohrteil 23 eine außen umlaufende Ringnut eingearbeitet, in der ein Dichtungsring 25 sitzt.

Der Rohrteil 23 preßt mit seiner Stirnseite den Endflansch 15 der Hülse 16 gegen den Innenbund 14 der Flanschteilbohrung 6. Im Inneren des Rohrteiles 23 ist die Ventilspindel 7 geführt, wobei mischen der oberen Stirnseite des Rohrteiles 23 und einer an der Ventilspindel am oberen Ende festgelegten Befestigungshülse 12 eine Druckfeder 26 angeordnet ist, die die Ventilspindel 7 in der dargestellten Lage relativ zum Rohrteil 23 nach oben drückt.

An der Innenseite des Rohrteiles 23 ist eine Ringkante 27 vorgesehen, welche einen Sitz für einen an der Ventilspindel 7 angeformten Ventilkegel 28 bildet. Der Ventilkegel 28 wird dabei durch eine nach oben gerichtete, kegelstumpfförmige Außenfläche des Ventilspindelkopfes 29 gebildet.

Der Rohrteil 23 des Ventilsitzkörpers 24 weist weiters im Bereich zwischen Ringkante 27 und Außengewinde 22 radiale Fluidauslaßöffnungen 30 auf, die eine Druckanschlußseite des Ventiles darstellen. Die untere Mündung 31 des Rohrteiles 23 bildet die andere Druckanschlußseite des Ventiles.

Eine am Außenumfang der Ventilspindel 7 angeordnete Gleitdichtung 32 dichtet die Führung der Ventilspindel 7 im Rohrteil 23 ab. Zur Abdichtung in der (nicht dargestellten) Ventilaufnahme sind am mündungsseitigen Ende des Rohrteiles 23 Dichtungsringe 33 in einer Umfangsnut eingelegt.

Die Ventilspindel 7 ist oberhalb des Ventilkegels 28 im Bereich der Fluidauslaßöffnungen 30 verjüngt abgesetzt und wird von einer zentralen Bohrung 34 durchsetzt, die den Druckraum im Bereich der Rohrteilmündung 31 zur einen Seite der Spindel mit einem Gegendruckraum 35 zur anderen Seite der Spindel verbindet, der durch den Raum gebildet wird, in welchem das mit der Druckfeder 26 vorgespannte und durch den Bolzen 18 beaufschlagte Ende der Spindel 7 liegt. Die zentrale Bohrung 34 dient zur Druckkompensation des Ventiles, so daß lediglich die Kraft der Feder 26 zu überwinden ist, um das Ventil zu öffnen.

Das in Fig. 1 dargestellte Einschraubventil (Cartridge-Ventil) hat die Funktion eines druckkompensierten 2/2-Wege-Ventiles mit Magnetbetätigung. Die gewünschte Funktion wird durch entsprechende Kombination der Ventilgußelemente Spindel 7, Betätigungseinrichtung 11, Flansch- und Einschraubteil 2, 3 bzw. Ventilsitzkörper 24 gewählt. Durch einfaches Auswechseln dieser Teile können verschiedenste andere Ventiltypen realisiert werden.

Beispielsweise zeigt Fig. 5 eine weitere mögliche Bestückung des Ventilgrundkörpers 1, die ein druckkompensiertes 3/2-Wege-Ventil mit Magnetbetätigung ergibt. Der Aufbau des Ventilgrundkörpers 1 aus Einschraubteil 2 und Flanschteil 3 ist ident mit dem der Ausführungsform nach Fig. 1. Die in den Flanschteil 3 eingeschraubte Magnetbetätigungseinrichtung 11 ist ebenso gleich der nach Fig. 1. Die 3/2-Wege-Ventil-Funktion wird erzielt, indem der Ventilsitzkörper 24' durch zwei ineinandergeschobene Rohrteile 23' und 23" gebildet wird, wobei der äußere Rohrteil 23' analog zum Rohrteil 23 nach Fig. 1 endseitig ein Außengewinde 22 und innenseitig eine Ringkante 27' aufweist, welche einen Sitz für einen ersten, nach unten gerichteten Ventilkegel 28' der Ventilspindel 7 bildet.

Der innere Rohrteil 23" übergreift mit einem Endflansch 36 die gewindeseitige Stirnseite des äußeren Rohrteiles 23' und wird dadurch beim Einschrauben des äußeren Rohrteiles 23' in den Einschraubteil 2 zwischen dem Rohrteil 23' - unter Zwischenlegung des Endflansches 15 der Hülse 16 - und dem Innenbund 14 des Flanschteiles 3 eingeklemmt.

Der innere Rohrteil 23" besitzt eine solche Länge, daß er in einem Abstand von der inneren Ringkante 27' des äußeren Rohrteiles 23' endet und mit der Innenkante 27" seiner Stirnseite einen Sitz für einen zweiten, nach oben gerichteten Ventilkegel 28" der Ventilspindel 7 bildet.

In ihrem Überlappungsbereich weisen der innere und der äußere Rohrteil 23" bzw. 23' fluchtende radiale Fluidauslaßöffnungen 37 auf und der äußere Rohrteil 23' weist im Bereich zwischen seiner Ringkante 27' und der Stirnseiten-Innenkante 27" des inneren Rohrteiles 23" weitere radiale Fluidauslaßöffnungen 38 auf. Durch diese Anordnung wird ein 3/2-Wege-Ventil geschaffen, wobei die eine Druckanschlußseite bei der Mündung 31 des äußeren Rohrteiles 23' liegt und die beiden anderen Druckanschlußseiten durch die Fluidauslaßöffnungen 37 und 38 gebildet werden.

Es ist ersichtlich, daß durch einfachen Austausch des einteiligen Ventilsitzkörpers 24 nach Fig. 1 durch einen zweiteiligen Ventilsitzkörper 24' nach Fig. 5 ein 3/2-Wege-Ventil mit den gleichen äußeren Einbaumaßen wie ein 2/2-Wege-Ventil aufgebaut werden kann. Dabei ist besonders hervorzuheben, daß durch die ineinandergeschobene Anordnung der zwei Rohrteile 23' und 23", durch das Übergreifen des äußeren Rohrteiles 23' durch den Endflansch 36 des inneren Rohrteiles 23" und durch das Einschrauben des äußeren Rohrteiles 23' in den Einschraubteil 2 eine sichere Fixierung der die Ventilspalte definierenden Ringkanten gewährleistet ist. Im Vergleich dazu müßte bei bekannten Lösungen zur Umrüstung eines 2/2-Wege-Ventiles zu einem 3/2-Wege-Ventil in die untere Ventilmündung 31 ein weiterer Ringkantenventilsitz eingeschraubt werden, was oft zu Dichtigkeits- und Festigkeitsproblemen führte.

Das in Fig. 9 dargestellte Einschraubventil ist mit einem speziellen Rohrteil 23"" ausgestattet, der ein Wechselventil mit Ablaßventilfunktion enthält, um das Einschraubventil mit allen Grundfunktionen auszustatten, die zur Ansteuerung von Hubzylindern notwendig sind.

Zu diesem Zweck ist am unteren Ende des Rohrteiles 23"" eine Hülse 119 mit Schiebesitz aufgenommen, deren obere Stirnseite eine Ringkante 120 als Sitz für den Ventilkegel 124 einer zweiten Ventilspindel 121 bildet. Diese ist unabhängig von der ersten Ventilspindel 7' bewegbar und wird durch eine Vorspannfeder 122 gegen die Ringkante 120 gedrückt, wobei sie die Hülse in ihre gezeigte untere Stellung drückt. Die Vorspannfeder 122 stützt sich an einem Innenabsatz 123 des Rohrteiles 23"" ab. Die Ventilspindel 121 ist in einen Sechskant 125 eingesetzt, der im Inneren des Rohrteiles 23"" axial gleiten kann und gleichzeitig das axiale Durchströmen des Fluides gestattet.

Der Mündungsraum 126 der Hülse 119 bzw. des Rohrteiles 23"" stellt einen weiteren Arbeitsanschluß des Ventiles dar. Beim dargestellten Ausführungsbeispiel hat der Rohrteil 23"" im Bereich zwischen erstem Ventilspalt 27"', 28"' und zweitem Ventilspalt 120, 124 eine radiale Fluidauslaßöffnung 127 als weiteren Arbeitsanschluß. Diese Fluidauslaßöffnung ist aber nicht unbedingt, sondern nur für bestimmte Anwendungsfälle erforderlich.

Die Hülse 119 ist in ihrem oberen Bereich außenseitig unter Bildung einer Schrägschulter 128 abgesetzt, die mit einer innenseitigen Ringkante 129 des Rohrteiles 23"" einen weiteren Ventilspalt 128, 129 begrenzt. Im Bereich zwischen Ventilspalt 128, 129 und Verbindungsbereich 130 mit der Hülse 119 weist der Rohrteil 23"" eine radiale Fluidauslaßöffnung 131 auf, die einen Ablaßanschluß des Ventiles darstellt.

Diese Anordnung bildet ein Wechselventil mit Ablaßventilfunktion: Bei Druckanspeisung am unteren Anschluß 126 werden sowohl die Ventilspindel 121 angehoben und damit der Ventilspalt 120, 124 geöffnet, als auch die HUlse 119 angehoben und damit der Ventilspalt 128, 129 geschlossen. Bei Abschalten der Druckanspeisung drückt die Vorspannfeder 122 die Spindel 121 und die HUlse 119 wieder in die gezeigte Ausgangsstellung, in der bei Öffnen des Schaltventiles 27"', 28"' das Druckfluid über die Ablaßöffnung 131 abströmt.

Auf diese Weise wird ein Einschraubventil geschaffen, das bereits die Grundfunktionen für die Ansteuerung eines Hubzylinders ausführen kann, nämlich die Funktion eines entsperrbaren Rückschlagventiles mit einem gesonderten Ablaßweg.

Eine Anwendungsmöglichkeit für dieses Ventil nach Fig. 9 ist in Fig. 10 dargestellt. Eine Hydraulikpumpe 132 fördert Drucköl aus einem Sammelbehälter 133 über einen Ansaugfilter 134 und ein Wechselventil 135 einerseits über ein magnetbetätigtes entsperrbares Rückschlagventil 136 zum Hubzylinder 137 einer (nicht dargestellten) Gelenk-Laderampe, und anderseits direkt zum Schwenkzylinder 138 dieser Laderampe. Der zweite Anschluß des Wechselventiles 135 führt zurück zum Sammelbehälter 133.

Beim Ausfahren des Hubzylinders 137 öffnen das Rückschlagventil 136 und das Wechselventil 135, wobei der Rückstromweg vom Wechselventil 135 zum Sammelbehälter 133 schließt. In ausgefahrener Stellung, des Hubzylinders 137 hält das Rückschlagventil 136 den Druck, den der belastete Hubzylinder 137 auf das Hydrauliksystem ausübt, während der Schwenkzylinder 138 auf Grund seiner Federvorbelastung wieder einfährt. Bei Entsperrung des Rückschlagventiles 136 fließt das Drucköl über die Bohrung 131 langsam in den Sammelbehälter 133 ab.

Das erfindungsgemäße Patronenventil übernimmt die Funktion der mit strichpunktierter Linie zusammengefaßten Elemente, wobei die Anschlußpunkte mit denselben Bezugszeichen wie die Ventilanschlüsse in Fig. 9 bezeichnet sind. Die Ventilspalte 120, 124 und 128, 129 beim erfindungsgemäßen Ventil übernehmen die Funktion des Wechselventiles 135, und der Ventilspalt 27"', 28"' übernimmt die Funktion des entsperrbaren Rückschlagventiles 136.

Wird das erfindungsgemäße Ventil zur Ansteuerung des Hubzylinders eines Scherenhubtisches eingesetzt, kann der Anschluß 127 entfallen.

Es ist ersichtlich, daß das erfindungsgemäße Einschraubventil sich für eine Vielzahl verschiedener, gängiger Ventiltypen eignet. Die dargestellten Bestückungen des Flanschteiles mit Betätigungseinrichtungen und des Einschraubteiles mit Ventilsitzkörpern bzw. Ventilspindeln stellen nur einige spezielle Anwendungsfälle der Erfindung dar.

## Patentansprüche

1. Einschraubventil mit einem im wesentlichen rohrförmigen Einschraubteil (2), der ein Außengewinde (4) zum Einschrauben in eine Ventilaufnahme aufweist, und mit einem an den Einschraubteil (2) angrenzenden, mit diesem einstückigen Flanschteil (3), der mit einer zentralen Bohrung (6) zum Durchtritt einer Ventilspindel (7) versehen ist, wobei die Bohrung (6) des Flanschteiles (3) ein Innengewinde (8) zur Aufnahme eines endseitig mit einem Außengewinde (9) versehenen, im wesentlichen rohrförmigen Gehäuses (10) einer auf die Ventilspindel (7) axial einwirkenden Betätigungseinrichtung (11) und der Einschraubteil (2) ein Innengewinde (21) zum Einschrauben eines endseitig mit einem Außengewinde (22) versehenen, auswechselbaren, im wesentlichen rohrförmigen Ventilsitzkörpers (24') aufweist, wobei der Ventilsitzkörper (24') durch zwei ineinandergeschobene Rohrteile (23', 23") gebildet ist, von denen der äußere Rohrteil (23') innenseitig eine Ringkante (27') aufweist, welche einen Sitz für einen ersten Ventilkegel (28') der Ventilspindel (7) bildet, wogegen der innere Rohrteil (23") einen Endflansch (36) aufweist, der einen innenseitigen Absatz des äußeren Rohrteiles (23') übergreift, wobei der innere Rohrteil (23") in einem Abstand von der inneren Ringkante (27') des äußeren Rohrteiles (23') endet und mit dieser Stirnseite einen Sitz für einen zweiten Ventilkegel (28") der Ventilspindel (7) bildet, und wobei der innere und der äußere Rohrteil (23' bzw. 23") im Überlappungsbereich fluchtende radiale Fluidauslaßöffnungen (37) aufweisen und der äußere Rohrteil (23') im Bereich zwischen der Stirnseite des inneren Rohrteiles (23") und der Ringkante (27') weitere radiale Fluidauslaßöffnungen (38) besitzt.

2. Einschraubventil mit einem im wesentlichen rohrförmigen Einschraubteil (2), der ein Außengewinde (4) zum Einschrauben in eine Ventilaufnahme aufweist, und mit einem an den Einschraubteil angrenzenden, mit diesem einstückigen Flanschteil (3), der mit einer zentralen Bohrung (6) zum Durchtritt einer Ventilspindel (7') versehen ist, wobei die Bohrung (6) des Flanschteiles (3) ein Innengewinde (8) zur Aufnahme eines endseitig mit einem Außengewinde (9) versehenen, im wesentlichen rohrförmigen Gehäuses (10) einer auf die Ventilspindel (7') axial einwirkenden Betätigungseinrichtung (11') und der Einschraubteil (2) ein Innengewinde (21) zum Einschrauben eines endseitig mit einem Außengewinde (22) versehenen, auswechselbaren, im wesentlichen rohrförmigen Ventilsitzkörpers (24"") aufweist, der aus einem Rohrteil (23"") besteht, an dessen Innenseite eine Ringkante (27"') angeordnet ist, welche einen Sitz für einen von der Ventilspindel (7') gesteuerten Ventilkegel (28"') bildet, wobei der Rohrteil (23"") im Bereich zwischen Ringkante (27"') und Außengewinde (22) radiale Fluidauslaßöffnungen (45) aufweist, wobei der Rohrteil (23"") an dem seinem Außengewinde abgekehrten Ende zur Aufnahme einer Hülse (119) mit Schiebesitz verlängert ist, deren aufgenommene Stirnseite einen Sitz für einen unabhängig vom Ventilkegel (28"') federnd vorgespannten weiteren Ventilkegel (124) bildet, und wobei ein Außenabschnitt (128) der Hülse (119) mit einer weiteren Ringkante (129) des Rohrteiles (23"") einen weiteren Ventilspalt bildet und der Rohrteil (23"") im Bereich zwischen diesem Ventilspalt und dem Verbindungsbereich (130) mit der Hülse (119) zumindest eine radiale Fluidablaßöffnung (131) aufweist.

3. Einschraubventil nach Anspruch 2, dadurch gekennzeichnet, daß der Rohrteil (23"") im Bereich zwischen den beiden Ringkanten (27"'; 129) zumindest eine radiale Fluidauslaßöffnung (127) aufweist.

4. Einschraubventil nach Anspruch 2 oder 3, dadurch gekennzeichnet, daß die Feder (122) zum Vorspannen des weiteren Ventilkegels (124) sich an einem Innenabsatz (123) des Rohrteiles (23"") abstützt.

## Claims

1. Threaded insertion valve with a substantially tubular threaded insertion part (2) provided with an external thread (4) for screwing into a valve receptacle and with a flanged part (3) abutting the threaded insertion part (2) and integral therewith which is provided with a central bore (6) for penetration by a valve spindle (7), the bore (6) of the flanged part (3) being provided with an internal thread (8) for receiving a substantially tubular housing (10) of an actuator apparatus (11) axially acting on the valve spindle (7) and provided at an end with an external thread (9), and the threaded insertion part (2) being provided with an internal thread (21) for screwing in of an exchangeable substantially tubular valve seat body (24') provided at an end with an external thread (22), the valve seat body (24') being formed by two telescoping tubular parts (23', 23"), the outer one (23') of which is provided on its inside with an annular shoulder (27') which forms a seat for a first valve cone (28') of the valve spindle (7), whereas the inner tubular part (23") is provided with an end flange (36) which extends beyond an internal abutment of the outer tubular part (23'), whereby the inner tubular part (23") ends at a distance from the inner annular shoulder (27') of the outer tubular part (23') and with this face end forms a seat for a second valve cone (28") of the valve spindle (7), and the inner and the outer tubular member (23' or 23") in the region of overlap being provided with aligned radial fluid discharge openings (37) and the outer tubular part (23') being provided with further fluid discharge openings (38) in the region between the face end of the inner tubular part (23") and the annular shoulder (27').

2. Threaded insertion valve with a substantially tubular threaded insertion part (2) provided with an external thread (4) for screwing into a valve receptacle and with a flanged part (3) abutting the threaded insertion part (2) and integral therewith which is provided with a central bore (6) for penetration by a valve spindle (7'), the bore (6) of the flanged part (3) being provided with an internal thread (8) for receiving a substantially tubular housing (10) of an actuator apparatus (11) axially acting on the valve spindle (7') and provided at an end with an external thread (9), and the threaded insertion part (2) being provided with an internal thread (21) for screwing in of an exchangeable substantially tubular valve seat body (24"") provided at an end with an external thread (22), the valve seat body (24') being formed by a tubular part (23") at the inner side of which there is provided an annular shoulder (27"') forming a seat for a valve cone (28"') controlled by the valve spindle (7'), the tubular part (23"") being provided with radial fluid discharge openings (30, 45) in the region between the annular shoulder (27"') and the external thread (22), the tubular part (23"") being extended at its end opposite the external thread for receiving a sleeve (119) with a sliding seat the face end of which forming a seat for a spring biased second valve cone (124) which is moveable independently of the first valve cone (28"'), an external portion (128) of the sleeve (119) and a second annular shoulder (129) of the tubular part (23"") forming a further valve gap, the tubular part (23"") being provided with at least one fluid discharge opening (131) in the region between this valve gap and the region of engagement (130) with the sleeve (119).

3. Threaded insertion valve in accordance with claim 2, characterized by the fact that the tubular part (23"") is provided with at least one fluid discharge opening (127) in the region between the first annular shoulder (27"') and the second annular shoulder (129).

4. Threaded insertion valve in accordance with claim 2 or 3, characterized by the fact that the spring (122) for biasing the second valve cone (124) is supported by an internal abutment (123) of the tubular part (23"").

## Revendications

1. Soupape à visser comportant une partie à visser (2), globalement tubulaire et ayant un filetage (4) pour être vissée dans un logement de soupape, et comportant une partie formant bride (3), adjacente à la partie à visser (2), construite d'un seul tenant avec celle-ci et munie d'un trou central (6) pour le passage d'une tige de soupape (7, 7'), selon laquelle le trou (6) de la partie formant bride (3) comporte un taraudage (8) pour loger une cage (10), globalement tubulaire et munie à son extrémité d'un filetage (9), d'un dispositif d'actionnement (11) agissant axialement sur la tige de soupape (7) et la partie à visser (2) comporte un taraudage (21) pour visser à l'intérieur un siège de soupape (24'), globalement tubulaire, remplaçable et muni à son extrémité d'un filetage (22), selon laquelle le siège de soupape (24') est formé par deux pièces tubulaires (23', 23") glissées l'une dans l'autre, parmi lesquelles la pièce tubulaire (23') extérieure comporte intérieurement une arête annulaire (27') qui constitue un logement pour un premier cône de soupape (28') de la tige de soupape (7) alors que la pièce tubulaire (23") intérieure comporte une bride terminale (36) qui passe par-dessus un gradin intérieur de la pièce tubulaire (23') extérieure, selon laquelle la pièce tubulaire (23") intérieure se termine à une certaine distance de l'arête annulaire (27") intérieure de la pièce tubulaire (23') extérieure et forme avec ce côté frontal un logement pour un second cône de soupape (28") de la tige de soupape (7), et selon laquelle les pièces tubulaires (23' ou 23") extérieure et intérieure comportent dans la zone de chevauchement des orifices d'évacuation de fluide (37) en alignement radial et la pièce tubulaire (23') extérieure a dans la zone située entre le côté frontal de la pièce tubulaire (23") intérieure et l'arête annulaire (27') d'autres orifices d'évacuation de fluide (38) radiaux.

2. Soupape à visser comportant une partie à visser (2), globalement tubulaire et ayant un filetage (4) pour être vissée dans un logement de soupape, et comportant une partie formant bride (3), adjacente à la partie à visser, construite d'un seul tenant pièce avec celle-ci et munie d'un trou central (6) pour le passage d'une tige de soupape (7'), selon laquelle le trou (6) de la partie formant bride (3) comporte un taraudage (8) pour loger une cage (10), globalement tubulaire et munie à son extrémité d'un filetage (9), d'un dispositif d'actionnement (11') agissant axialement sur la tige de soupape (7') et la partie à visser (2) comporte un taraudage (21) pour visser a l'intérieur un siège de soupape (24"), globalement tubulaire, remplaçable, muni à son extrémité d'un filetage (22), constitué d'une pièce tubulaire (23"') sur la face intérieure de laquelle est agencée une arête annulaire (27"') qui forme un logement pour un cône de soupape (28"') commandé par la tige de soupape (7'), selon laquelle la pièce tubulaire (23"") comporte dans la zone située entre l'arête annulaire (27"') et le filetages (22) des orifices d'évacuation de fluide (45) radiaux, selon laquelle la pièce tubulaire (23"") est prolongée à son extrémité éloignée de son filetage afin de recevoir un manchon (119) à ajustement appuyé dont le côté frontal reçu forme un logement pour un autre cône de soupape (124) indépendant du cône de soupape (28"') et précontraint par ressort, et selon laquelle un tronçon extérieur (128) du manchon (119) forme avec une autre arête annulaire (129) de la pièce tubulaire (23"") un autre interstice de soupape et la pièce tubulaire (23"") comporte dans la zone située entre cet interstice de soupape et la zone de jonction (130) avec le manchon (119) au moins un orifice d'évacuation de fluide (131) radial.

3. Soupape à visser selon la revendication 2, caractérisée en ce que la pièce tubulaire (23"") comporte dans la zone située entre les deux arêtes annulaires (27"', 129) au moins un orifice d'évacuation de fluide (127) radial.

4. Soupape à visser selon la revendication 2 ou 3, caractérisée en ce que le ressort (122) pour la précontrainte de l'autre cône de soupape (124) s'appuie sur un gradin intérieur (123) de la pièce tubulaire (23"").
